# FASCICULE DE BREVET EUROPEEN

(11) **EP 2 473 061 B1**
(45) Date de publication et mention de la délivrance du brevet: **30.03.2016**
(21) Numéro de dépôt: 10762975.0
(22) Date de dépôt: 06.08.2010
(51) Int. Cl.: A23G 4/02, A23G 4/06, A23G 4/10

(54) **PROCEDE D'OBTENTION DE CHEWING-GUMS PAR REMPLACEMENT DU TALC PAR DES AGGLOMERATS DE CRISTAUX**
VERFAHREN ZUR HERSTELLUNG EINES KAUGUMMIS MITTELS ERSATZ VON TALK DURCH KRISTALLAGGLOMERATE
METHOD FOR OBTAINING CHEWING GUM, IN WHICH TALC IS REPLACED WITH AGGLOMERATES OF CRYSTALS

(30) Priorité: 01.09.2009 FR 0955960
(43) Date de publication de la demande: 11.07.2012
(73) Titulaire: Roquette Frères, 62136 Lestrem (FR)
(72) Inventeur: BOIT, Baptiste, F-62400 Bethune (FR); LEFEVRE, Philippe, F-59660 Haverskerque (FR); LIS, José, F-59253 La Gorgue (FR); ORTIZ DE ZARATE, Dominique, F-59660 Merville (FR)
(74) Mandataire: Cabinet Plasseraud
(86) Numéro de dépôt international: PCT/FR2010/051677
(87) Numéro de publication internationale: WO 2011/027062

(56) Documents cités:
- EP-A1- 0 431 995
- EP-A1- 1 138 661
- EP-A2- 0 561 088
- WO-A1-93/05662
- WO-A1-97/26798
- GB-A- 2 079 129

## Description

La présente invention porte sur un procédé d'obtention d'un chewing-gum et plus particulièrement sur le remplacement partiel ou total du talc dans un tel procédé.

Les procédés d'obtention de chewing-gums comportent de manière générale cinq étapes *(Formulation and production of chewing and bubble gum, édité par Douglas Fritz, Kennedy's Publications Ltd, London, UK).* Au cours de la première étape, les différents composés sont mélangés au moyen d'un pétrin comprenant 2 pales en forme de z. Le cycle entier de l'opération dure de 15 à 20 minutes et les ingrédients sont ajoutés au fur et à mesure dans le pétrin. Afin de rendre la gomme base malléable, celle-ci est chauffée préalablement et en cours de mélange. En fin de malaxage, la température de la pâte est d'environ 50°C. Parmi les ingrédients constitutifs des chewing-gums, on distingue deux grands groupes que sont les éléments insolubles dans l'eau et donc dans la salive, tels que principalement la gomme base et les éléments solubles dans l'eau conférant au chewing-gum sa saveur tels que les édulcorants notamment. L'étape de mélange est suivie d'une seconde étape d'extrusion à chaud afin d'obtenir une bande de chewing-gum plus ou moins large suivant l'appareil utilisé. Afin de réduire l'épaisseur de la bande obtenue, une étape de laminage est prévue. Au cours de cette étape, la bande passe successivement entre plusieurs paires de rouleaux d'écartement décroissant. L'étape de laminage est suivie d'une dernière étape de formage/découpage, pouvant être une simple étape de mise en forme associée à une découpe ou prédécoupe de la bande obtenue avant conditionnement. Or, après l'étape d'extrusion à chaud, la bande de gomme est extrêmement collante. De fait, afin d'éviter sa destruction ou la perte de son intégrité au cours du laminage, il est classiquement procédé à une étape de saupoudrage sur les deux faces de la bande entre les étapes d'extrusion et de laminage. De nombreux agents sont utilisés dans les poudres de saupoudrage. On retrouve ainsi des agents fluidifiants ou des agents anti-mottants tels que le talc, le carbonate de calcium, le phosphate tricalcique, la silice ou les silicates. Tous ces agents minéraux sont susceptibles de dégrader les propriétés organoleptiques des chewing-gums obtenus. En effet, ces agents sont insolubles, sans saveur, voire désagréables en bouche.

Par ailleurs, la poudre la plus largement utilisée pour le saupoudrage est le talc. Or, le talc peut faire l'objet d'une contamination par un produit de nature chimique très proche et pourtant très toxique : l'amiante. Ainsi, le talc contaminé aurait été impliqué dans des processus de cancérisation, que ce soit du tube digestif suite à une absorption par voie orale, ou du tissu pulmonaire lors d'une absorption par voie respiratoire, notamment au cours de sa manipulation. La manipulation du talc est donc réglementée et des équipements de protection respiratoire sont obligatoires pour le personnel de production.

Afin de réduire les quantités de talc incorporées au cours de l'élaboration des chewing-gums et tout en évitant que la poudre de saupoudrage soit ressentie sur la langue lors de la dégustation du chewing-gum, on a longtemps utilisé le sucre glace de granulométrie proche de celle du talc (poudre de granulométrie inférieure à 40µm et de diamètre moyen inférieur à 10µm). Cette utilisation s'est toujours faite en mélange car le sucre glace à un très mauvais écoulement. Puis, le sucre glace a été remplacé par des poudres de polyols non hygroscopiques telles que notamment le Mannitol. De la même façon que pour le sucre glace, les poudres de polyols utilisées sont de très fines granulométries. Les poudres plus largement utilisées ont une quantité de particules inférieures à 75µm de l'ordre de 95 à 75% pour une granulométrie moyenne de 65 à 20 µm. Ainsi, la richesse en particules de fines granulométries a longtemps été considérée comme très favorable dans cette application que ce soit vis-à-vis du caractère sableux que du remplacement du talc.

Cependant, un remplacement total du talc par ces poudres n'est pas recommandé puisqu'elles ont un très mauvais écoulement les rendant inaptes au saupoudrage. Dans le cas d'un remplacement partiel, le talc ayant un bon écoulement, confère au mélange un écoulement toujours médiocre mais suffisant pour permettre le saupoudrage de la bande de chewing-gum. Or, même dans le cadre d'un remplacement partiel du talc, la réduction d'écoulement du mélange de poudre est telle qu'elle contraint au dépôt d'une grande quantité de poudre sur la bande de chewing-gum, induisant de fait un gaspillage important, une dégradation de la qualité des chewing-gums obtenus, ou une modification des conditions de réglage des appareils.

Par ailleurs, la faible granulométrie de ces poudres augmente la genèse de poussières en suspension dans l'air, accentuant ainsi les risques associés à la présence d'amiante dans le talc pour les manipulateurs.

En outre, les poudres de saupoudrages ne permettent pas toujours l'obtention d'une couche uniforme de saupoudrage. On observe ainsi la création de zones non ou insuffisamment poudrées constituant des zones de collage de la bande de chewing-gum sur les instruments de laminage, responsables de la dégradation des bandes et de fait, de l'interruption du procédé de fabrication.

Enfin, un phénomène de prise en masse des poudres de polyols de fines granulométries dans leur conditionnement est observé. En effet, ces poudres sont instables en ce qu'elles mottent au stockage ou au cours du transport. Les masses obtenues ne peuvent être désolidarisées que sous l'exercice de forces très importantes. Ce phénomène pose problème dans le cadre de la production de chewing-gum en ce qu'il peut être responsable de la formation d'agrégats compactes susceptibles de boucher les équipements de saupoudrage des chewing-gums.

Bien que l'utilisation d'anti-mottants dans l'alimentation engendre des contraintes réglementaires puisqu'ils peuvent être considérés comme toxiques ou dangereux, cette solution a été envisagée. Cependant, alors qu'une réduction du mottage a été mise en évidence dans le cas des poudres de polyols hygroscopiques, aucun changement de comportement similaire n'est observé pour des poudres de polyols peu ou non hygroscopiques.

Afin d'avoir un procédé efficace, de mise en oeuvre aisée, sans danger pour les manipulateurs, permettant l'obtention de chewing-gum ne contenant pas ou peu d'agents minéraux tels que le talc, tout en maintenant, voire en améliorant les qualités organoleptiques des chewing-gums obtenus, l'invention porte sur un procédé d'obtention de chewing-gums comprenant une étape de mélange des ingrédients, une étape d'extrusion du mélange, une étape de saupoudrage par une poudre de saupoudrage, une étape de laminage et une étape de formage/découpage, dans laquelle la poudre de saupoudrage comprend une composition pulvérulente d'agglomérats de cristaux ladite composition pulvérulente comprenant au moins un polyol (appelé également sucre-alcool).

La composition pulvérulente selon l'invention permet un remplacement total ou partiel des agents minéraux de types anti-mottants ou fluidifiants tels que le talc au cours de l'étape de saupoudrage de la bande chewing-gum, tout en maintenant un procédé efficace et en conservant les qualités organoleptiques du chewing-gum obtenu.

Au sens de l'invention l'étape de mélange des ingrédients concerne l'étape de mélange de la gomme base avec les arômes et tout autre ingrédient afin d'obtenir la pâte à mâcher qui sera extrudée puis saupoudrée avant d'être laminée puis découpée ou formée.

Au sens de l'invention, on entend par « cristaux » une composition cristalline produit de la cristallisation d'une solution de polyol (un polyol dans un solvant) ou d'un fondu de polyol (solide fondu en l'absence de solvant).

L'expression composition cristalline couvre également les compositions obtenues par un broyage subséquent à l'étape de cristallisation. La composition cristalline peut être un mélange de cristaux de plusieurs polyols.

Selon l'invention on entend par l'expression « composition d'agglomérats de cristaux » une composition obtenue par agglomération de cristaux. Une composition convenant à la mise en oeuvre du procédé selon l'invention peut être obtenue par la technique de granulation par voie humide ou par voie sèche. De telles technologies sont décrites dans la littérature (Agglomération Processes, Phenomena, Technologies, Equipment de Wolfgang Pietsch Chapitre 6 « Agglomération Technologies » WILEY - VCH, 2002).

Dans le cas de la technique de granulation par voie humide, trois technologies sont classiquement mises en oeuvre : la technologie en mélangeur, la technologie par fluidisation et la technologie par pression. La technologie par mélangeur peut être réalisée avec un cisaillement faible ou élevé. La technologie par fluidisation peut être réalisée sur des granulateurs à lit d'air fluidisé ou dans des tours d'atomisation. La technologie par pression est réalisée sur des extrudeuses, des râpes, des grilles ou plaques perforées.

Ces technologies peuvent être réalisées en batch ou en continu. Elles sont combinées avec une étape de séchage simultanée ou à posteriori, de refroidissement et une éventuelle étape de classification avec recyclage des fractions de produits non désirées.

Dans un premier mode de réalisation préférentiel du procédé, on peut employer par exemple un mélangeur-granulateur continu de type SCHUGI FLEXOMIX vertical commercialisé par la société HOSOKAWA dans lequel on introduit, via un doseur pondéral, les cristaux de départ à agglomérer en continu et via un doseur volumétrique, le liant en continu. Le liant étant sous la forme d'un liquide, d'une poudre ou d'une suspension. Dans ce procédé, les cristaux de départ et le liant sont intimement mélangés dans le mélangeur-granulateur équipé d'un axe avec couteaux disposés en pales, et d'un système de pulvérisation de liquides par buses d'injection. On pourra choisir de manière préférentielle une buse bi-fluide dans laquelle le liant est mis sous forme de fines gouttelettes par un fluide sous pression. On choisira avantageusement de l'air comprimé ou de la vapeur d'eau sous pression.

Dans un mode préférentiel du procédé, la bonne dispersion des constituants et l'agglomération des cristaux de départ sont réalisées par agitation à grande vitesse, c'est-à-dire d'une valeur au moins égale à 2000 rpm, de préférence au moins égale à 3000 rpm. A la sortie du mélangeur-granulateur, les agglomérats formés sont déchargés par gravité en continu dans un séchoir.

Cette deuxième étape de séchage en sortie du mélangeur-granulateur permet d'éliminer le solvant provenant du liant et de donner la solidité aux agglomérats. Le séchoir peut être par exemple un séchoir à lit fluidisé ou un séchoir à tambour rotatif.

La composition d'agglomérats de cristaux conforme à l'invention est obtenue après refroidissement et éventuellement tamisage. Dans ce cas, les fines particules peuvent être directement recyclées en tête de granulation, et les grosses particules être broyées et recyclées en tête de tamisage ou en tête de granulation.

Dans un second mode de réalisation préférentiel du procédé, on choisit de réaliser la granulation par voie humide des cristaux en tour d'atomisation. On introduit alors en continu dans ladite tour d'atomisation les cristaux et le liant sous forme de fines gouttelettes par une buse de pulvérisation. Dans ce procédé, on s'assure que les cristaux de départ et le liant sont intimement mis en contact. Pour cela, on injecte les cristaux dans le spray de pulvérisation du liant.

Dans un mode préférentiel du procédé, on choisit d'utiliser une tour d'atomisation MSD (Multi-Stage Dryer) commercialisé par la société NIRO ayant une capacité d'évaporation d'eau de l'ordre de 350 kg/h. On alimente alors les cristaux de départ en continu à un débit compris entre 400 et 600 kg/h environ, la granulation humide se faisant avec un solvant tel que de l'eau au titre d'agent liant, comme il sera exemplifié ci-après. La bonne pulvérisation du liant est assurée par une buse de pulvérisation haute pression. Les agglomérats de cristaux obtenus sont ensuite refroidis sur un lit fluidisé vibré. Au vu des points de fusion des cristaux, la Société Demanderesse a trouvé qu'il fallait gérer avec rigueur le suivi des températures de fonctionnement de la tour d'atomisation.

La composition d'agglomérats de cristaux comporte une note d'écoulement comprise entre 55 et 90, préférentiellement entre 60 et 85, et plus préférentiellement entre 65 et 80.

L'aptitude à l'écoulement est évaluée en utilisant l'appareil POWDER TESTER de type PTE commercialisé par la société HOSOKAWA. Cet appareil permet de mesurer, dans des conditions standardisées et reproductibles, l'aptitude à l'écoulement d'une poudre et de calculer un note d'écoulement, encore appelé indice de coulabilité (flowability index), en se basant sur les travaux de M. Ralph Carr (1965). La note d'écoulement est calculée à partir des valeurs obtenues par la mise en oeuvre des quatre tests suivants : Compressibilité, Angle de repos, Angle de spatule, Uniformité (voir manuel technique de l'appareil POWDER TESTER de type PTE). Pour ce dernier test, la granulométrie utilisée est celle obtenue par granulométrie laser décrite plus loin.

Le bon écoulement de la composition pulvérulente permet une mise en oeuvre du procédé aisée et sans modification majeure des conditions de mise en oeuvre en comparaison avec l'utilisation de talc.

Selon une variante de l'invention, la composition pulvérulente comprend au moins un polyol ayant une hygroscopicité comprise entre 0,01 et 5%, de préférence entre 0,05 et 3% et plus préférentiellement entre 0,08 et 1%.

Préférentiellement, ledit au moins un polyol est le polyol majoritaire (plus de 50% des polyols de la composition pulvérulente) de sorte que la composition comporte une hygroscopicité comprise entre 0,01 et 5%, de préférence entre 0,05 et 3% et plus préférentiellement entre 0,08 et 1%.

La composition pulvérulente selon l'invention contient moins de 60%, préférentiellement de 50% à 0,1%, de préférence de 40% à 1%, plus préférentiellement de 35 à 2%, et encore plus préférentiellement de 25% à 5%, de particules de diamètre inférieur à 75µm.

Par « particules inférieures à 75µm » on entend toute particule susceptible d'être détectée au moyen d'un granulomètre à diffraction LASER type LS 230 de la société BECKMAN-COULTER, d'une granulométrie de 75µm à 0,4µm.

Ainsi, les valeurs de répartition granulométrique sont déterminées sur un granulomètre à diffraction LASER type LS 230 de la société BECKMAN-COULTER, équipé de son module de dispersion poudre par aspiration (aspirateur de 1400watts) de l'échantillon (voie sèche), en suivant le manuel technique et les spécifications du constructeur.

Les conditions opératoires de vitesse de vis sous trémie et d'intensité de vibration de la goulotte de dispersion sont déterminées de manière à ce que la concentration optique soit comprise entre 4 % et 12 %, idéalement 8 %.

La gamme de mesure du granulomètre à diffraction LASER type LS 230 est de 0,4 µm à 2.000 µm. Les résultats sont calculés en % volumique, et exprimés en µm. Le mode de calcule utilisé est celui selon la théorie de FRAUNHOFER.

La mesure donne accès au taux de fines inférieures notamment à 75 µm. La courbe de distribution granulométrique permet également de déterminer la valeur du diamètre moyen volumique (moyenne arithmétique) D4,3.

Le test de mesure de l'hygroscopicité consiste ici à évaluer la variation de poids de l'échantillon mesuré lorsqu'il est soumis à différentes humidités relatives (H.R.) à 20°C dans un équipement fabriqué par la société SURFACE MEASUREMENTS SYSTEMS (Londres UK) et dénommé Dynamic Vapor Sorption Série 1.

Cet équipement consiste en une microbalance qui permet de quantifier l'évolution pondérale d'un échantillon par rapport à une référence (ici la nacelle de référence de la balance différentielle est vide) lorsque celui-ci est soumis à différentes conditions climatiques.

Le gaz vecteur est l'azote, et le poids de l'échantillon est compris entre 10 et 11 mg. Les H.R. programmées sont 20, 40, 60 et 80%. Le facteur de stabilité qui permet le passage automatique d'une H.R. à la suivante est le rapport dm/dt qui est fixé à 0,002% pendant 20 minutes.

En final, l'hygroscopicité exprimée est le résultat du calcul suivant : [(m80-m20)/m20]x100, où m20 est le poids de l'échantillon à la fin du temps de maintien à 20%H.R., et m80 le poids de l'échantillon à la fin du temps de maintien à 80% d'H.R.

Pour que le saupoudrage puisse être réalisé dans des conditions de température et d'humidité relative courantes dans les ateliers de production, il est préférable d'utiliser une poudre faiblement hygroscopique.

Typiquement, la composition pulvérulente est un agglomérat de cristaux contenant 50 à 100% d'un polyol, préférentiellement 75 à 99%, plus préférentiellement 85 à 98,5%, encore plus préférentiellement 90 à 98%, très préférentiellement 92 à 97% d'un polyol.

Selon une variante de l'invention, le polyol est un monosaccharide hydrogéné, ou un disaccharide hydrogéné ou leur mélange ; préférentiellement choisi parmi le mannitol, l'isomalt, le xylitol, le maltitol, l'érythritol, le lactitol, le sorbitol ou leurs mélanges. De façon préférentielle, le polyol est choisi parmi l'érythritol, le mannitol, l'isomalt et leurs mélanges.

De façon préférentielle, la composition pulvérulente présente un diamètre moyen (moyenne arithmétique) D4,3 compris entre 75µm et 400µm, de préférence entre 100µm et 350µm et plus préférentiellement entre 110µm et 250µm, encore plus préférentiellement entre 125 et 240µm, typiquement entre 150 et 225µm.

Selon l'invention, les agglomérats de cristaux sont obtenus par granulation de cristaux, lesdits cristaux étant obtenus par cristallisation simple ou fractionnée.

Typiquement, les agglomérats de cristaux sont obtenus par granulation de cristaux, lesdits cristaux étant obtenus par cristallisation par refroidissement d'un fondu, par évaporation ou évapo-cristallisation d'une solution de polyol ou par adjonction d'un diluant.

Selon une première variante, la cristallisation est simple et s'effectue par des procédés thermiques tels que par refroidissement d'un fondu de polyol, par évaporation. L'évaporation peut être partielle et permettre par la concentration de la solution de polyol une cristallisation sous forme de cristaux majoritairement individualisés. Elle peut être totale et permettre une cristallisation sous forme de granules de cristaux, par exemple par pulvérisation de la solution de polyols. Par « granules » on entend une structure présentant une forme sphérique en microscopie à balayage.

De façon préférentielle, les cristaux obtenus sont sous forme de cristaux majoritairement individualisés.

L'évaporation est dite adiabatique lorsque la vaporisation du solvant provoque une réduction de température, on parle d'évapo-cristallisation.

Selon une seconde variante, la cristallisation est simple et s'effectue par des procédés physicochimiques. Typiquement, la cristallisation s'effectue par adjonction d'un diluant, plus particulièrement d'un solvant organique tel qu'un alcool.

Selon une troisième variante, la cristallisation s'effectue de façon fractionnée c'est à dire par cristallisations successives, les cristaux obtenus à chaque étape sont solubilisés ou dissout dans un solvant ou fondus puis cristallisés à nouveau.

Typiquement, l'étape de cristallisation est suivie d'une étape de sélection des particules éventuellement précédé d'un broyage des cristaux obtenus.

Préférentiellement, la sélection de particules est effectuée par tamisage ou sur un séparateur pneumatique.

Selon une variante de l'invention, la composition pulvérulente comprend une protéine ou un polysaccharide choisi parmi les amidons, les maltodextrines, les dextrines les gommes, la pectine et les dérivés cellulosiques ou leur mélange.

Typiquement, les protéines sont choisies parmi les protéines fibreuses telles que le collagène ou le produit de son hydrolyse partielle. L'exemple d'un produit d'hydrolyse du collagène est la gélatine.

Par « polysaccharides », on entend des polymères formés d'un certain nombre de monosaccharides. Parmi ces polysaccharides, on distingue les homopolysaccharides constitués du même monosaccharide, et les hétéropolysaccharides formés de différents monosaccharides.

Avantageusement, ledit polysaccharide présente :
- entre 15 et 50% de liaisons glucosidiques 1-6, préférentiellement entre 22 % et 45 %, et plus préférentiellement entre 27 et 34 %,
- une teneur en sucres réducteurs inférieure à 20%, préférentiellement comprise entre 2 et 20%, plus préférentiellement entre 3 et 16%, et encore plus préférentiellement entre 3 et 12%,
- un indice de polymolécularité inférieur à 5, préférentiellement compris entre 0,5 et 4, et plus préférentiellement entre 1 et 3,5, et
- une masse moléculaire moyenne en nombre Mn inférieure à 4500 g/mole, préférentiellement comprise entre 500 et 4500 g/mole, plus préférentiellement entre 600 et 4000 g/mole, et encore plus préférentiellement comprise entre 1000 et 2700 g/mole.

Une composition pulvérulente selon l'invention comprend des polysaccharides ou des protéines incorporés sous forme liquide ou de poudre comme liant de granulation lors de la granulation de cristaux de polyol.

Préférentiellement, le polysaccharide est choisi parmi les amidons, les maltodextrines ou les dextrines ou leurs mélanges.

Les maltodextrines sont classiquement obtenues par hydrolyse acide et/ou enzymatique de l'amidon. Elles renferment un mélange complexe de saccharides linéaires ou branchés. Du point de vue réglementaire, les maltodextrines ont un équivalent dextrose (DE) de 1 à 20.

Parmi les amidons et les maltodextrines préférés, on peut citer les amidons ou les maltodextrines de céréales telles que le riz, le maïs, le blé ou le sorgho, de tubercules tels que la pomme de terre, le manioc, la patate douce ou de légumineuses. Par légumineuses, on entend toute plante appartenant aux familles des césalpiniacées, des mimosacées ou des papilionacées et notamment toute plante appartenant à la famille des papilionacées comme, par exemple, le pois, le haricot, la fève, la fèverole, la lentille, la luzerne, le trèfle ou le lupin.

Avantageusement, la poudre de saupoudrage comprend moins de 50%, préférentiellement moins de 45%, voire moins de 35%, typiquement de 10 à 0,1% d'un silicate ou d'un carbonate. Selon une variante préférentielle, la poudre de saupoudrage est exempte de talc.

Au sens de la présente invention, le silicate est choisi parmi le silicate de magnésium hydraté naturel ou ses versions équivalentes synthétiques de type silicate de magnésium, tri-silicate de magnésium, voire du silicate de calcium. Parmi les carbonates connus le carbonate de calcium est préféré.

L'invention porte également sur le chewing-gum obtenu par la mise en oeuvre du procédé selon l'invention caractérisé en ce qu'il comprend à la surface du chewing-gum une poudre de saupoudrage comprenant une composition pulvérulente d'agglomérats de cristaux ladite composition pulvérulente comprenant au moins un polyol.

Le chewing-gum selon l'invention est de la pâte à mâcher (gomme base, arômes...). Lorsque le chewing-gum est en stick ou en tablette, cette poudre en surface est nécessaire pour éviter tout collage des sticks entre eux ou des sticks au papier. De même lorsque le chewing-gum est dragéifié une fine couche reste présente à la surface la gomme base (ou pate à mâcher) en dépit du dépoussiérage préalable à la dragéification. Cette couche est visible en microscopie optique à balayage.

D'autres caractéristiques et avantages de la présente invention apparaîtront clairement à la lecture des exemples donnés ci-après qui viennent illustrer l'invention.

### Exemple 1 :

Les échantillons A à Z obtenus selon les procédés décrits ci-après sont définis et identifiés au tableau 1.

Un sirop de mannitol à 96% de mannitol a été cristallisé selon le brevet européen EP0202168.

La première cristallisation a été menée pour obtenir un produit de granulométrie de 135µm (échantillon B), les cristaux obtenus sont ensuite broyés pour obtenir un produit de granulométrie de 67µm (échantillon A).

L'échantillon C est obtenu par granulation sur un mélangeur-granulateur SCHUGI FLEXOMIX vertical alimenté en continu via un doseur pondéral poudre, à un débit de 900 kg/h, avec un mannitol cristal B (échantillon B). Le mélangeur-granulateur est également alimenté en continu avec de l'eau à 80°C et à un débit de 115 1/h, via une buse de pulvérisation bi-fluide. La bonne pulvérisation est assurée par de l'air à une pression de 2 bars. L'axe rotatif à couteaux est préalablement réglé à la vitesse de 3000 tpm. La poudre granulée humide en sortie du mélangeur-granulateur tombe en continu, par gravité, dans un séchoir à lit d'air fluidisé à 2 compartiments. Dans le premier compartiment, le produit granulé est séché par de l'air à 120°C, puis il est refroidi à 20°C dans le deuxième compartiment.

**Tableau 1**

| | |
|---|---|
| Mannitol cristaux D4,3 = 67 µm | A |
| Mannitol cristaux D4,3 = 135 µm | B |
| Mannitol aggloméré sur Schugi D4,3 = 198 µm | C |
| Mannitol aggloméré sur Schugi D4,3 = 150 µm | D |
| Mannitol aggloméré sur Schugi D4,3 = 205 µm | E |
| Mannitol aggloméré sur Schugi D4,3 = 113 µm | F |
| Mannitol aggloméré sur Schugi D4,3 = 168 µm | G |
| Mannitol aggloméré sur Schugi D4,3 = 173 µm | H |
| Mannitol aggloméré sur Schugi D4,3 = 343 µm | I |
| Maltitol cristaux D4,3 = 43 µm | J |
| Maltitol aggloméré Schugi D4,3 = 89 µm | K |
| Maltitol aggloméré sur Schugi D4,3 = 161µm | L |
| Xylitol cristaux D4,3 = 129 µm | M |
| Xylitol aggloméré Schugi D4,3 = 343 µm | N |
| Isomalt cristaux D4,3 = 51 µm | O |
| Isomalt aggloméré Schugi D4,3 = 153 µm | P |
| Maltitol cristaux D4,3 = 61 µm | Q |
| Maltitol aggloméré en tour MSD D4,3 = 230 µm | R |
| Xylitol cristaux D4,3 = 72 µm | S |
| Xylitol aggloméré en tour MSD D4,3 = 178 µm | T |
| Xylitol / MDB D4,3 = 290µm | U |
| Mannitol/amidon co-atomisaté granulé D4,3 = 108 µm | V |
| Maltitol aggloméré D4,3 = 265 µm | W |
| Mannitol compacté D4,3 =223µm | X |
| Mannitol aggloméré (F) + 10% talc | Y |
| Mélange 50% mannitol cristaux (A) et 50% maltitol cristaux (Q) | Z |

Le produit granulé, séché et refroidi est ensuite tamisé en continu sur un tamis rotatif équipé d'une toile métallique de 800 µm. La fraction des particules supérieure à 800µm est broyée et recyclée en tête du mélangeur granulateur. Le produit obtenu correspond à l'échantillon C.

Les échantillons D, E, F, G et I, sont obtenus par la mise en oeuvre du même procédé dans lequel, la pulvérisation est réalisée par de la vapeur sous pression (voir tableau 2). Dans le cas de l'échantillon I, la fraction des particules inférieures à 100µm est recyclée en tête du mélangeur granulateur.

**Tableau 2**

| | C | D | E | F | G | H | I |
|---|---|---|---|---|---|---|---|
| Cristaux de départ | B | B | B | A | A | A | B |
| Débit poudre (kg/h) | 900 | 900 | 900 | 900 | 900 | 900 | 550 |
| Débit liant (1/h) | 115 | 50 | 80 | 50 | 80 | 115 | 65 |
| Liant | Eau 80°C | Eau 80°C | Eau 80°C | Eau 80°C | Eau 80°C | Eau 80°C | Eau 80°C |
| Buse bi-fluide | Air | Vapeur | Vapeur | Vapeur | Vapeur | Air | Vapeur |
| Pression (bars) | 2 | 2,5 | 2,5 | 4 | 4 | 2 | 3,5 |
| Température air de séchage (°C) | 120 | 60 | 85 | 75 | 95 | 95 | 85 |
| Tamis | <80µm | <80µm | <80µm | <80µm | <80µm | <800µm | 100µm< <800µm |

Les échantillons J et Q sont du maltitol cristallisé obtenus par la mise en oeuvre d'un procédé de cristallisation tel que décrit dans le brevet européen EP 0 905 138. La poudre obtenue est ensuite broyée afin d'obtenir un produit de granulométrie proche de 40µm (échantillon J) et de 60µm (échantillon Q) .

Les échantillons K et L, sont obtenus par la mise en oeuvre du procédé de granulation de l'échantillon J avec le granulateur SCHUGI selon les étapes précédemment décrites et dans les conditions de débit, de pression et de température définies dans le tableau 3. L'échantillon K est granulé à l'eau et l'échantillon L avec un sirop de maltitol à 50% de matière sèche avec le granulateur SCHUGI selon les étapes précédemment décrites et dans les conditions définies dans le tableau 3.

Les échantillons M et S sont obtenus par cristallisation dans l'eau d'un sirop de xylitol. La cristallisation a été menée pour obtenir un produit de granulométrie proche de 130µm (échantillon M). L'échantillon M est ensuite broyé afin d'obtenir une poudre d'une granulométrie de 72µm (échantillon S).

L'échantillon N est obtenu par granulation de l'échantillon J par l'utilisation d'un mélangeur-granulateur continu de type FLEXOMIX vertical HOSOKAWA SCHUGI selon les étapes précédemment décrites et dans les conditions de débit, de pression et de température définies dans le tableau 3.

L'échantillon O est obtenu par cristallisation selon les conditions décrites dans le brevet EP 1 674 475, la poudre cristalline obtenue est ensuite broyée de sorte à obtenir une poudre ayant une granulométrie moyenne de 51µm.

L'échantillon P est obtenu par la mise en oeuvre du procédé de granulation avec le granulateur SCHUGI de l'échantillon O selon les conditions décrites au tableau 3.

L'échantillon Z est obtenu par la mise en oeuvre du procédé de granulation avec le granulateur SCHUGI des échantillons A et Q dans un ratio 1/1 selon les conditions décrites au tableau 3.

**Tableau 3**

| | K | L | N | P | Z |
|---|---|---|---|---|---|
| Cristaux de départ | J | J | M | O | 50% A 50% Q |
| Débit poudre (kg/h) | 500 | 500 | 500 | 500 | 500 |
| Débit liant (1/h) | 25 | 25 | 40 | 65 | 80 |
| Liant | Eau 80°C | Maltitol 50% MS 80°C | Eau 80°C | Eau 80°C | Eau 80°C |
| Buse bi-fluide | Air | Air | Air | Air | Air |
| Pression (bars) | 2 | 2 | 2 | 2 | 2 |
| Température air de séchage (°C) | 70 | 100 | 80 | 90 | 120 |
| Tamis | <800µm | <800µm | <800µm | <800µm | <800µm |

L'échantillon R a été obtenu en granulant l'échantillon Q dans une tour d'atomisation MSD.

La tour d'atomisation MSD utilisée comporte une capacité d'évaporation de 350 kg/h et est alimentée via un doseur pondéral poudre avec du maltitol cristal Q (échantillon Q) à un débit de 500 kg/h. La granulation est réalisée en pulvérisant de l'eau à un débit de 110 1/h par une buse à 50 bars de pression. L'air principal de séchage entre dans la tour à 180°C, l'air de séchage du lit statique entre dans la tour à 70°C. La température des buées en sortie est alors de 90°C (tableau 4). En sortie de la tour d'atomisation, le produit passe sur un lit fluide vibré où il est refroidi par de l'air en 3 zones de température fixées respectivement à 35°C, 20°C et 20°C.

L'échantillon T a été obtenu en granulant l'échantillon S dans une tour d'atomisation MSD selon les étapes décrites ci-dessus et les conditions décrites dans le tableau 4.

**Tableau 4**

| | R | T |
|---|---|---|
| Cristaux de départ | Q | S |
| Débit poudre (kg/h) | 500 | 500 |
| Débit liant (1/h) | 110 | 70 |
| Liant | Eau 80°C | Eau 80°C |
| Pression buse (bars) | 50 | 40 |
| Tp air de séchage (°C) | 180 | 135 |
| Tp air lit statique (°C) | 70 | 75 |
| Tp sortie buées | 90 | 75 |

L'échantillon U est obtenu par granulation avec une solution aqueuse à 30% de matières sèches (MS) de Maltodextrines branchées (MDB)(commercialisées par la demanderesse sous la dénomination NUTRIOSE® FM06). On dépose 500 g d'une poudre de xylitol de 77 µm dans le bol du séchoir granulateur à lit d'air fluidisé de type STREA- 1 de AEROMATIC muni d'une buse d'injection.

Par de l'air pulsé à la base dudit bol, on met en suspension la poudre de xylitol à une température de 60°C. On pulvérise ensuite la solution de maltodextrines branchées à un débit de 4 ml/min et à une pression de 1 bar. Les granules récupérés après 25 à 30 min de temps de séjour, sont récupérés et séchés dans ledit granulateur pendant 30 minutes à 60 C. Les granules sont ensuite calibrés sur un tamis calibré entre 100-500µm de taille de maille. La composition pulvérulente obtenue est composée de 95% xylitol et de 5% de maltodextrines branchées.

L'échantillon V est un mélange co-atomisé granulé d'amidon et de mannitol dans un ratio (en masse) amidon/mannitol de 20/80. Il est obtenu par atomisation d'une suspension de cristaux de mannitol (échantillon A) et d'amidon (amidon de maïs « extra-blanc ») dans une tour d'atomisation de type MSD (i.e. Multi Stage Dryer) équipée d'une buse d'atomisation haute pression avec recyclage des fines particules en tête de tour (tour MSD 20 commercialisée par la société NIRO). La suspension est préparée à 20°C.

Les conditions opératoires de fabrication de ces coagglomérats sont figurés dans le tableau 5 suivant.

**Tableau 5**

| | |
|---|---|
| Matière sèche (%) | 55 |
| Pression (bars) | 30 |
| Buse (SPRAYING SYSTEM type SK) | 52*21 |
| Température air amont (°C) | 155 |
| Température du lit fluidisé statique (°C) | 84 |
| Température air de sortie (°C) | 60 |

L'échantillon W est une poudre de maltitol obtenue par granulation humide d'un maltitol cristallin avec un sirop de maltitol selon les conditions suivantes :
25 kg de l'échantillon Q sont introduits dans un granulateur GLATT AGT 400 fonctionnant en mode batch (la sortie du classificateur à air est fermée). Le débit d'air d'entrée est réglé à 800 m3/h avec une température de 100°C (de manière à obtenir une vitesse de l'air de fluidisation à une valeur comprise entre 1 et 2 m/s). Un sirop de matière sèche de 27% et d'une richesse de 75% de maltitol, constitué de 1,7 kg de maltitol de type MALTISORB® 75/75 (commercialisé par la demanderesse) dilués avec 3 kg d'eau est pulvérisé à une température de 40°C à l'aide d'une buse bi-fluide (pression d'air de 4 bars) en position " bottom spray " sur les particules de maltitol en mouvement dans le flux d'air. Le débit de la pulvérisation est réglé de manière à obtenir une température dans le lit de particules en mouvement de 31°C (débit d'air 800m3/h, température d'air pendant la pulvérisation 100°C). A la fin de la pulvérisation, la température de l'air est augmentée jusqu'à 120°C. Ces conditions sont maintenues jusqu'à ce que la température dans le lit de poudre s'élève à 75°C.

La poudre est ensuite refroidie à 20°C puis tamisée entre 100 et 500 µm.

L'échantillon X est obtenu par granulation par voie sèche de l'échantillon A. L'échantillon A a été compacté sur un compacteur à rouleau Alexanderwerk WP120. La pression de compactage est réglée à 40 bars. Les deux granulateurs successifs sont équipés successivement de grilles de 1600 µm puis de 600 µm.

L'échantillon Y est réalisé à l'aide d'un mélangeur à retournement MIXOMAT A14 (FUSCHS/Suisse). Les poudres à mélanger sont introduites dans un tonnelet de 5 litres de volume utile (6 litres de volume total) qui est mis en mouvement pendant 15 minutes dans ce mélangeur. Les quantités mises en oeuvre sont 1,500 kg de l'échantillon de mannitol aggloméré F puis 150 g de talc.

**Tableau 6**

| Echantillons | A | B | C | D | E | F | G | H | I | J | K | L | M |
|---|---|---|---|---|---|---|---|---|---|---|---|---|---|
| Taux de particules inférieures à 75 µm (%) | 65,9 | 33,5 | 13,0 | 29,6 | 15,2 | 56,2 | 21,9 | 24,6 | 3,8 | 84,4 | 35,2 | 8,8 | 30,3 |
| Diamètre moyen (µm) | 67 | 135 | 198 | 150 | 205 | 113 | 168 | 173 | 343 | 43 | 89 | 161 | 129 |
| Note d'écoulement (sur 100) | 41,5 | 51,5 | 72 | 66 | 73 | 54 | 66 | 63 | 77 | 47 | 63 | 76 | 41 |
| Densité aérée (g/ml) | 0, 45 | 0,53 | 0,64 | 0,57 | 0,58 | 0,52 | 0,54 | 0,56 | 0,59 | 0,38 | 0,56 | 0,51 | 0,45 |
| Densité tassée (g/ml) | 0, 79 | 0,82 | 0,78 | 0, 76 | 0, 71 | 0, 77 | 0,69 | 0, 73 | 0,66 | 0, 83 | 0, 72 | 0,59 | 0,86 |
| Hygroscopicité | 0,11 | 0,09 | 0,09 | 0,11 | 0,10 | 0,12 | 0,10 | 0,09 | 0,10 | 0,11 | 0, 13 | 0,35 | 0,9 ,09 |

**Tableau 7**

| Echantillons | N | O | P | Q | R | S | T | U | V | W | X | Y | Z |
|---|---|---|---|---|---|---|---|---|---|---|---|---|---|
| Taux de particules inférieures à 75 µm (%) | 2, 4 | 78, 2 | 10, 7 | 71, 1 | 12, 5 | 58, 7 | 15, 6 | 2, 2 | 42 | 4, 5 | 17, 6 | 68, 4 | 10,9 |
| Diamètre moyen (µm) | 341 | 51 | 153 | 61 | 230 | 72 | 178 | 290 | 108 | 265 | 223 | 79,6 | 184 |
| Note d'écoulement (sur 100) | 68 | 49 | 74 | 47 | 65 | 34 | 68 | 80 | 72 | 85,5 | 61 | 59 | 74 |
| Densité aérée (g/ml) | 0, 57 | 0, 42 | 0, 54 | 0, 50 | 0, 56 | 0, 45 | 0, 54 | 0, 71 | 0, 52 | 0, 68 | 0, 62 | 0, 52 | 0,55 |
| Densité tassée (g/ml) | 0, 66 | 0, 78 | 0, 66 | 0, 89 | 0, 69 | 0, 89 | 0, 63 | 0, 78 | 0, 63 | 0, 71 | 0, 77 | 0, 71 | 0,69 |
| Hygroscopicité | 1, 2 | 1, 5 | 1, 61 | 0, 11 | 0, 14 | 0, 13 | 1, 4 | 4, 0 | 2, 0 | 0, 37 | 0, 09 | 0, 12 | 0,10 |

Les échantillons A, J, O et Q (tableaux 6 et 7) présentent une teneur importante en particules inférieures à 75 µm, respectivement de 65,9%, 84,4%, 78,2% et 71,1%. Ils présentent de plus, un mauvais écoulement traduit par une faible note d'écoulement respectivement, 41,5 ; 47 ; 49 ; et 47. D'autres échantillons, bien que comportant une plus faible quantité de particules ayant une granulométrie inférieure à 75µm, présentent une faible note d'écoulement, tel est le cas des échantillons B ; M, et S qui présentent respectivement un pourcentage en particules inférieures à 75µm de 33,5%, 30,3%, et 58,7% pour une note d'écoulement de 51,5 ; 41 et 34.

Par contre, force est de constater que les échantillons C à I, K, Ll, N, P, R, T à X et Z comportent à la fois un bon écoulement à savoir supérieur à 55 et un bon profil granulométrique avec un pourcentage de poudre ayant une granulométrie inférieure à 75µm inférieure à 60%. Ainsi, des poudres de mannitol, de maltitol, de xylitol ou d'isomalt ou de mélange de Xylitol/MDB, Mannitol/amidon ayant une très bonne note d'écoulement et une faible quantité de particules de fine granulométrie ont pu être obtenues.

Pour atteindre une note d'écoulement supérieure à 60, il est préférable d'utiliser une poudre dont la teneur en particules inférieures à 75 µm est inférieures à 50%.

L'adjonction de talc ne permet pas d'améliorer la note d'écoulement de la composition pulvérulente. Ainsi dans le cas de l'échantillon F qui présente de tous les produits agglomérés la note d'écoulement la plus faible (54) et aussi la teneur en particules inférieures à 75 µm la plus élevée (56,2%), l'adjonction de 10% de talc (échantillon Y) conduit à une augmentation du taux de particules inférieures à 75µm et à une faible amélioration de la note d'écoulement.

### Exemple 2

Une production industrielle de chewing-gum est réalisée sur une ligne de production de marque TOGUM (BOSCH-TOGUM).

Cette production est réalisée avec une formule standard de chewing-gum « sans sucre » :
Gomme base : 32%
Sorbitol poudre (NEOSORB® P60W) : 49%
Mannitol 60 : 7%
Sirop de maltitol (LYCASIN® 80/55HDS) : 9%
Glycérine: 0,2%
Aspartame : 0,2%
Arôme menthe liquide : 2,1%
Arôme menthe poudre : 0,5%

L'étape de mélange est réalisée dans un pétrin bras en z TOGUM GT120 d'une capacité d'environ 60kg. Le mélange est réalisé en continu.

A t=0, on introduit dans le pétrin la gomme base préalablement chauffée une nuit à 50°C et la moitié du sorbitol poudre. A t=3 min, on introduit le mannitol, à t=5 min le sirop de maltitol, à t=7 min, la moitié du sorbitol et l'aspartame, à t= 11min, la glycérine, à t=12 min, les arômes. A t = 16 min, le mélange est stoppé et la pâte déchargée. La température de la pâte est alors d'environ 55°C. On divise celle-ci en pains d'environ 2 kg qui sont stockés 1 heure à 20°C, 50% d'humidité relative, ce qui amènera la température de la pate à 47°C avant extrusion.

L'étape d'extrusion est réalisée sur un équipement TOGUM TO-E82, avec le corps de l'extrudeuse chauffé à 40°C et la tête à 45°C.

L'étape de saupoudrage et l'étape de laminage sont réalisées sur un laminoir TOGUM TO-W191. Il est équipé en premier lieu de deux postes de saupoudrage, un situé sur le dessus de la bande de chewing-gum extrudée et un au dessus d'une bande transporteuse située en dessous de la bande de chewing-gum, et dont le rôle est d'apporter la poudre de saupoudrage sur la face inférieure du chewing-gum. Ainsi, la bande de chewing-gum est saupoudrée sur les deux faces avant le premier poste de laminage. Il est équipé ensuite de 4 paires de rouleaux de laminage, avec, situé entre la seconde et la troisième paires, un système de dépoussiérage constitué d'une paire de brosses, l'une située sur le dessous et l'autre sur le dessus de la bande de chewing-gum. Ce système sert à enlever l'excès de poudre sur les deux faces de la bande de chewing-gum. Il est équipé enfin de deux paires de rouleaux pour le formage et la découpe afin de conférer au chewing-gum la forme finale recherchée, dans le cas présent, les coussinets.

Les poudres de référence A à Z de l'exemple 1 ont été testés en saupoudrage. La poudre de saupoudrage était constituée uniquement de ces échantillons : aucun talc n'a été ajouté, sauf pour l'échantillon Y qui est un mélange de mannitol aggloméré et de talc.

Les observations effectuées (tableau 8) ont été : la facilité à obtenir l'écoulement de la poudre de l'équipement de saupoudrage, la maîtrise de la quantité de poudre déposée par rapport à la quantité souhaitée, la quantité de poudre perdue, la formation de poussières en suspension dans l'air, et l'aspect du chewing-gum après dépoussiérage.

La caractéristique « écoulement de la poudre de l'équipement de saupoudrage » est observée par rapport à l'homogénéité de dépôt de poudre sur la largeur de la bande de chewing-gum ainsi que vis-à-vis des variations de débit de dépôt de poudre de saupoudrage au cours du procédé de fabrication de chewing-gums.

La caractéristique « la maîtrise de la quantité de poudre déposée par rapport à la quantité souhaitée » correspond à la possibilité de réglage de la quantité de dépôt.

La « quantité de poudre perdue » correspond au ratio entre la quantité de poudre déposée sur la bande de chewing-gum vis-à-vis de celle récupérée après dépoussiérage de la bande de chewing-gum.

La formation de poussières en suspension dans l'air correspond une comparaison visuelle de la densité de poudre passée dans l'air au cours de la mise en oeuvre du procédé.

L'aspect du chewing-gum après dépoussiérage correspond à une observation visuelle d'une non uniformité de la couche de poudre après saupoudrage et dépoussiérage.

L'ensemble de ces caractéristiques ont été classées sur une échelle d'intensité.

De plus, les chewing-gums ont été testés par un jury de 15 panelistes pour déterminer si l'augmentation de la taille des particules de la poudre de saupoudrage confère au chewing-gum une texture sableuse. Les essais sont effectués selon la norme AFNOR V 09-014 (avril 1982) sur les échantillons A à Z par groupe de 5 ou 6 échantillons par essai. Les 5 ou 6 échantillons ont été présentés simultanément, en imposant un ordre de dégustation différent pour chaque membre du jury. Le descripteur imposé à savoir le caractère sableux en bouche est évalué sur une échelle à 9 points graduée de la façon suivante : absence, très faible, faible, net, prononcé, très prononcé. L'analyse de variance (ANOVA de Friedman) discrimine les échantillons sur leurs caractères sableux (p << 0.05). Les valeurs obtenues sont reprises dans le tableau 8.

Dans le tableau 8, les symboles correspondent aux significations suivantes.

Pour l'écoulement de la poudre et la maîtrise de la quantité de poudre saupoudrée : « ++ » = très bon, «+» = bon, «+/- » = passable, «- » = mauvais et « -- » = très mauvais.

Pour la quantité de poudre perdue et la quantité de particules en suspension «--» = très élevée, « - » = élevée, «+/- » = faible et «+ » = très faible.

**Tableau 8**

| Echantillons | Ecoulement de la poudre de l'équipement de saupoudrage | Maîtrise de la quantité de poudre saupoudrée | Quantité de poudre perdue | Particules en suspension dans l'air | Aspect du chewing-gum après dépoussiérage | Sensation sableuse à la dégustation en bouche |
|---|---|---|---|---|---|---|
| A | -- | -- | -- | -- | C | ++ |
| B | - | - | -- | - | C | ++ |
| C | ++ | ++ | ++ | ++ | C | + |
| D | ++ | ++ | ++ | ++ | C | + |
| E | ++ | + | ++ | ++ | C | + |
| F | + | ++ | ++ | - | C | +/- |
| G | ++ | + | ++ | ++ | C | +/- |
| H | ++ | ++ | ++ | ++ | C | +/- |
| I | ++ | ++ | ++ | ++ | +/- | +/- |
| J | -- | -- | -- | -- | C | ++ |
| K | ++ | ++ | ++ | +/- | C | +/- |
| L | ++ | ++ | ++ | ++ | C | +/- |
| M | -- | -- | -- | ++ | C | + |
| N | ++ | ++ | ++ | ++ | +/- | + |
| O | +/- | -- | -- | -- | C | +/- |
| P | ++ | ++ | ++ | ++ | C | + |
| Q | -- | -- | -- | -- | C | ++ |
| R | ++ | ++ | ++ | ++ | C | ++ |
| S | -- | -- | -- | -- | C | ++ |
| T | ++ | ++ | ++ | ++ | C | + |
| U | ++ | ++ | ++ | ++ | +/- | +/- |
| V | ++ | ++ | ++ | ++ | C | ++ |
| W | ++ | ++ | ++ | ++ | +/- | +/- |
| X | + | ++ | + | ++ | C | +/- |
| Y | ++ | ++ | ++ | - | C | + |
| z | ++ | ++ | ++ | ++ | C | +/- |

Pour la caractéristique de sensation sableuse lors de la dégustation en bouche : «++» - absence, « + »= très faible, «+/- »= faible.

Pour l'aspect de chewing-gum après dépoussiérage, « C » = aspect conforme (surfaces supérieure et inférieure uniformément poudrées), « +/- »= la quantité restant après dépoussiérage forme une couche non uniforme, des zones trop faiblement poudrées demeurent formant des zones de collage le long de la bande de chewing-gum.

Les échantillons I, N, U et W présentant un diamètre moyen très élevé respectivement de 343, 341, 290 et 265 µm et un taux très faible de particules inférieures à 75 µm, respectivement 3,8 ; 2,4 ; 2,2 et 4,5% donnent à la bande de chewing-gum après dépoussiérage une couche non uniforme de poudre insuffisante pour assurer un saupoudrage efficace

L'échantillon K qui présente un diamètre moyen de 89 µm a généré un peu plus de particules en suspension dans l'air que les autres produits granulés

Les échantillons A, B, J, M, O, Q et S (tableau 8) qui présentent un taux élevé de particules intérieures à 75µm présentent un mauvais écoulement, qui rend difficile le réglage de l'équipement de saupoudrage et donc la quantité déposée est difficile à maîtriser. En conséquence, le taux de perte est important. Par ailleurs, de par la présence de fines, le taux de particules en suspension dans l'air est élevé.

L'échantillon F présente un écoulement amélioré, mais perfectible et son taux de particules inférieures à 75 µm élevé (56,2%) est à l'origine de poussières. On remarque que l'adjonction de talc à l'échantillon F (échantillon Y) améliore l'homogénéité de dépôt, la constance de celui-ci au cours du procédé ainsi que les qualités organoleptiques (sensation sableuse en bouche) mais ne réduit pas les particules présentes dans l'air.

Les échantillons C, D, E, G, H, I, K, L, N, P, R et T à Z, présentant moins de 50% de particules inférieures à 75µm et une note d'écoulement supérieure à 60, possèdent un écoulement qui permet de maîtriser la quantité de poudre déposée et de limiter les pertes. De plus, la faible quantité de particules en suspension est un avantage pour la propreté des locaux et la santé des opérateurs. Par ailleurs, l'augmentation du diamètre moyen des poudres n'a pas de conséquences négatives sur les qualités organoleptiques du chewing-gum obtenu : la dégustation en bouche a révélé aucune, sensation sableuse en bouche, la granulométrie étant compensée par la forte solubilité des agglomérats de polyols.

### Exemple 3 :

Un test de mottage est réalisé en laboratoire. Ce test permet de simuler le mottage qui apparait dans les big-bags (sacs contenant de 500 à 1500Kg de poudre) des poudres ou le long des zones de stockage de la ligne de production des chewing-gums.

Une quantité de 1300 grammes de produit est placée dans un sachet de polyéthylène de 100 µm d'épaisseur (dimension à plat de 32,4 4 cm sur 20,9 cm). Ce sachet est ensuite fermé hermétiquement après avoir chassé le maximum possible d'air occlus. Il est ensuite placé dans un cylindre perforé de 22 cm de hauteur et 13 cm de diamètre, percé de trous de 8mm de diamètre, disposés en quinconce avec une distance de 12 mm entre les centres des trous voisins. Un disque métallique de diamètre juste inférieur au cylindre est placé sur le sachet. Sur ce disque est posé un poids de 6.6 kg, soit l'équivalent d'une pression de 580kg/m², pression identique à celle que subit la poudre située au fond d'un big-bag.

L'ensemble est ensuite placé dans une enceinte climatique réglée de manière à lui faire subir 15 cycles de 6 heures (3 heures à une température de 15°C et une humidité relative de 85%, suivi de 3 heures à une température de 30°C et une humidité relative de 85%).

A la fin de ces cycles, le sachet est retiré délicatement du cylindre et coupé. Une première observation de la poudre est effectuée. La totalité de la poudre est ensuite introduite dans un tonnelet de 5 litres utiles (6 litres de volume total avec un diamètre d'ouverture supérieur au diamètre du cylindre perforé), qui est mis en rotation une minute dans un mélangeur à retournement MIXOMAT A14 (FUSCHS/Suisse). La totalité de la poudre est ensuite versée sur un tamis dont les mailles ont des ouvertures carrées d'environ 8mm sur 8mm. On ne récupère ainsi que les mottes de produit de plus de 8mm environ de diamètre, dont le poids total est mesuré. Le taux de produit motté est calculé en divisant le poids de ces mottes par le poids initial d'échantillon mis en oeuvre (1300 grammes).

**Tableau 9**

| Echantillons | A | B | C | D | E | F | G | H | I | J |
|---|---|---|---|---|---|---|---|---|---|---|
| Aspect de la poudre | -- | - | + | + | + | +/- | +/- | +/- | + | -- |
| Taux de produit motté | 29% | 20% | 3% | 5% | 3% | 16% | 11% | 12% | 0% | 47 |

**Tableau 10**

| Echantillons | K | L | M | N | Q | R | S | T | U | V |
|---|---|---|---|---|---|---|---|---|---|---|
| Aspect de la poudre | - | +/- | -- | + | -- | + | -- | +/- | + | + |
| Taux de produit motté | 29% | 22% | 75% | 0% | 38% | 0% | 85% | 17% | 0% | 0% |

Concernant la caractéristique de l'aspect de la poudre (tableaux 9 et 10) : « + » = poudre fluide, « +/- »= présence de blocs friables, « - » = présence de blocs durs, « -- » présence de blocs très durs.

Les échantillons A, J, M, Q et S (voir tableaux 9 et 10) présentent un taux de produit motté très élevé (de 29 à 85%) et des blocs très durs. Ils sont inadaptés à la livraison en big-bags puisqu'il est très difficile voire impossible de retirer des blocs aussi durs de big-bags.

De plus les équipement servant à convoyer et saupoudrer la poudre lors de la production du chewing-gum sont prévus pour une poudre sans agglomérats très durs qui risquent à tout moment de bloquer et stopper le saupoudrage , ce qui a pour conséquence un arrêt presque immédiat de la ligne, la bande de chewing-gum collant sur toute l'installation.

Pour utiliser ces échantillons, un broyage et un tamisage seront indispensables.

L'échantillon B (voir tableau 9) a un taux de produit motté élevé (20%), ce qui indique que la poudre située au fond des big-bags va acquérir de la cohésion très rapidement après remplissage et que ces big-bags deviendront très difficiles à vider. Ce conditionnement est donc à déconseiller pour cet échantillon. Tout au moins ce stockage devra être très limité dans le temps. Pour les échantillons F, G, H et T qui présentent un taux de mottage de 11% à 17 %, ce conditionnement est envisageable car les blocs observés sont friables et peuvent être détruits par un simple tamisage. Pour les échantillons C, D, E, I, N, R, U et V, présentant des taux de produit mottés très faibles (<5%) et souvent nuls, le remplissage, stockage et le vidage des big-bags ne présenteront aucune difficulté : ils peuvent sans souci être commercialisés dans ce type d'équipement et être utilisé ensuite dans le saupoudrage de la bande de chewing-gum sans aucun retraitement.

## Revendications

1. Procédé d'obtention de chewing-gums comprenant une étape de mélange des ingrédients, une étape d'extrusion du mélange, une étape de saupoudrage par une poudre de saupoudrage, une étape de laminage et une étape de formage-découpage, **caractérisée en ce que** ladite poudre de saupoudrage comprend une composition pulvérulente d'agglomérats de cristaux, ladite composition pulvérulente comprenant au moins un polyol, et étant obtenue par granulation de cristaux par voie humide en employant un mélangeur-granulateur continu vertical équipé d'un axe avec couteaux disposés en pales, et d'un système de pulvérisation de liquides par buses d'injection,
- présentant une note d'écoulement comprise entre 55 et 90, et
- contenant moins de 60% de particules de diamètre inférieur à 75µm.

2. Procédé selon la revendication 1, **caractérisé en ce que** ledit polyol présente une hygroscopicité comprise entre 0,01 et 5%.

3. Procédé selon l'une quelconque des revendications 1 à 2, **caractérisé en ce que** ladite composition d'agglomérats de cristaux contient de 50% à 0,1% de particules de diamètre inférieur à 75µm.

4. Procédé selon l'une ou l'autre des revendications 1 à 3, **caractérisé en ce que** ladite composition d'agglomérats de cristaux contient plus de 50% de polyol.

5. Procédé selon l'une quelconque des revendications 1 à 4, **caractérisé en ce que** ledit polyol est un monosaccharide hydrogéné, un disaccharide hydrogéné ou leur mélange.

6. Procédé selon la revendication 5, **caractérisé en ce que** ledit polyol est choisi parmi le mannitol, l'isomalt, le xylitol, le maltitol, l'érythritol, le lactitol, le sorbitol et leurs mélanges.

7. Procédé selon l'une quelconque des revendications 1 à 6, **caractérisé en ce que** ladite composition pulvérulente présente un diamètre moyen D4,3 compris entre 75µm et 400µm.

8. Procédé selon l'une quelconque des revendications 1 à 7, **caractérisé en ce que** les cristaux sont obtenus par cristallisation simple ou fractionnée.

9. Procédé selon la revendication 8, **caractérisé en ce que** les cristaux sont obtenus par cristallisation par refroidissement d'un fondu, par évaporation ou évapo-cristallisation d'une solution de polyol ou par adjonction d'un diluant.

10. Procédé selon l'une quelconque des revendications 1 à 9, **caractérisé en ce que** la poudre de saupoudrage comprend moins de 50% d'un silicate ou d'un carbonate.

11. Procédé selon l' une quelconque des revendications 1 à 10, **caractérisé en ce que** la composition pulvérulente comprend une protéine ou un polysaccharide préférentiellement choisi parmi les amidons, les maltodextrines, les dextrines, les gommes, la pectine et les dérivés cellulosiques ou leur mélange.

12. Chewing-gum obtenu par la mise en oeuvre du procédé selon l'une quelconque des revendications 1 à 11 **caractérisé en ce qu'**il comprend à la surface du chewing-gum, une poudre de saupoudrage comprenant une composition pulvérulente d'agglomérats de cristaux, ladite composition pulvérulente comprenant au moins un polyol, et étant obtenue par granulation de cristaux par voie humide en employant un mélangeur-granulateur continu vertical équipé d'un axe avec couteaux disposés en pales, et d'un système de pulvérisation de liquides par buses d'injection,
- présentant une note d'écoulement comprise entre 55 et 90 et
- contenant moins de 60% de particules de diamètre inférieur à 75µm.

## Patentansprüche

1. Verfahren zur Herstellung eines Kaugummis, umfassend einen Schritt des Mischens der Bestandteile, einen Schritt des Extrudierens der Mischung, einen Schritt der Bestäubung mit einem Streupuder, einen Walzschritt und einen Schritt des Verformens-Zerschneidens, **dadurch gekennzeichnet, dass** der Streupuder eine pulverförmige Zusammensetzung aus Kristallagglomeraten umfasst, wobei die pulverförmige Zusammensetzung mindestens ein Polyol umfasst und durch Granulierung von Kristallen mittels Feuchtigkeit unter Verwendung eines vertikalen kontinuierlichen Mischer-Granulierers ausgestattet mit einer Achse mit flügelförmig angeordneten Messern und einem Flüssigkeitssprühsystem durch Einspritzdüsen hergestellt wurde,
- mit einem Fließwert zwischen 55 und 90 und
- enthaltend weniger als 60% an Partikeln mit einem Durchmesser von weniger als 75µm.

2. Verfahren nach Anspruch 1, **dadurch gekennzeichnet, dass** das Polyol eine Hygroskopizität von zwischen 0,01 und 5% aufweist.

3. Verfahren nach einem der Ansprüche 1 bis 2, **dadurch gekennzeichnet, dass** die Zusammensetzung aus Kristallagglomeraten 50% bis 0,1% Partikel mit einem Durchmesser von weniger als 75µm enthält.

4. Verfahren nach einem der Ansprüche 1 bis 3, **dadurch gekennzeichnet, dass** die Zusammensetzung aus Kristallagglomeraten mehr als 50% Polyol enthält.

5. Verfahren nach einem der Ansprüche 1 bis 4, **dadurch gekennzeichnet, dass** das Polyol ein hydriertes Monosaccharid, ein hydriertes Disaccharid oder eine Mischung davon ist.

6. Verfahren nach Anspruch 5, **dadurch gekennzeichnet, dass** das Polyol aus Mannitol, Isomalt, Xylitol, Maltitol, Erythritol, Lactitol, Sorbitol und Mischungen davon ausgewählt ist.

7. Verfahren nach einem der Ansprüche 1 bis 6, **dadurch gekennzeichnet, dass** die pulverförmige Zusammensetzung einen durchschnittlichen Durchmesser D4,3 zwischen 75µm und 400µm aufweist.

8. Verfahren nach einem der Ansprüche 1 bis 7, **dadurch gekennzeichnet, dass** die Kristallen durch einfache oder fraktionierte Kristallisation hergestellt werden.

9. Verfahren nach Anspruch 8, **dadurch gekennzeichnet, dass** die Kristallen durch Kristallisation durch Abkühlung einer Schmelze, durch Verdampfung oder Verdampf-Kristallisation einer Polyollösung oder durch Zugabe eines Verdünnungsmittels hergestellt werden.

10. Verfahren nach einem der Ansprüche 1 bis 9, **dadurch gekennzeichnet, dass** der Streupuder weniger als 50% Silikat oder Karbonat umfasst.

11. Verfahren nach einem der Ansprüche 1 bis 10, **dadurch gekennzeichnet, dass** die pulverförmige Zusammensetzung ein Protein oder ein Polysaccharid vorzugsweise ausgewählt aus Stärken, Maltodextrinen, Dextrinen, Gummis, Pektin, und Zellulosederivaten oder einer Mischung davon umfasst.

12. Kaugummi hergestelltet durch die Anwendung des Verfahrens nach einem der Ansprüche 1 bis 11, **dadurch gekennzeichnet, dass** es auf der Kaugummioberfläche einen Streupuder mit einer pulverförmigen Zusammensetzung aus Kristallagglomeraten umfasst, wobei die pulverförmige Zusammensetzung mindestens ein Polyol umfasst und durch Granulierung von Kristallen mittels Feuchtigkeit unter Verwendung eines vertikalen kontinuierlichen Mischer-Granulierers ausgestattet mit einer Achse mit flügelförmig angeordneten Messern und einem Flüssigkeitssprühsystem durch Einspritzdüsen hergestellt wurde,
- mit einem Fließwert zwischen 55 und 90 und
- enthaltend weniger als 60% an Partikeln mit einem Durchmesser von weniger als 75µm.

## Claims

1. A method for producing chewing gums comprising a step of mixing the ingredients, a step of extruding the mixture, a step of dusting with a dusting powder, a step of rolling and a step of forming/cutting, wherein said dusting powder comprises a pulverulent composition formed of agglomerates of crystals,
said pulverulent composition
comprising at least one polyol and
being obtained by wet granulation of crystals, by using a vertical continuous mixer-agglomerator equipped with a shaft with knives positioned as blades and with a system for spraying liquids via injection nozzles, exhibiting a flow grade of between 55 and 90 and
comprising less than 60% of particles with a diameter of less than 75 µm.

2. The method as claimed in claim 1, wherein said polyol exhibits a hygroscopicity of between 0.01 and 5%.

3. The method as claimed in claim 1 or 2, wherein said composition formed of agglomerates of crystals comprises from 50% to 0.1% of particles with a diameter of less than 75 µm.

4. The method as claimed in any one of claim 1 to 3, wherein said composition formed of agglomerates of crystals comprises more than 50% of polyol.

5. The method as claimed in any one of claims 1 to 4, wherein said polyol is a hydrogenated monosaccharide, hydrogenated disaccharide or their mixture.

6. The method as claimed in claim 5, wherein said polyol is chosen from mannitol, isomalt, xylitol, maltitol, erythritol, lactitol, sorbitol and their mixtures.

7. The method as claimed in any one of claims 1 to 6, wherein said pulverulent composition exhibits a mean diameter D4,3 of between 75 µm and 400 µm.

8. The method as claimed in any one of claims 1 to 7, said crystals being obtained by single or fractional crystallization.

9. The method as claimed in claim 8, wherein the crystals are obtained by crystallization by cooling a melt, by evaporation or evaporative crystallization of a polyol solution or by addition of a diluent.

10. The method as claimed in any one of claims 1 to 9, wherein the dusting powder comprises less than 50% of a silicate or carbonate.

11. The method as claimed in any one of claims 1 to 10, wherein the pulverulent composition comprises a protein or a polysaccharide preferably chosen from starches, maltodextrins, dextrins, gums, pectin and cellulose derivatives or their mixture.

12. A chewing gum obtained by the implementation of the method as claimed in any one of claims 1 to 11, wherein it comprises, at the surface of the chewing gum, a dusting powder comprising a pulverulent composition formed of agglomerates of crystals,
said pulverulent composition
comprising at least one polyol, and
being obtained by wet granulation of crystals, by using a vertical continuous mixer-agglomerator equipped with a shaft with knives positioned as blades and with a system for spraying liquids via injection nozzles,
exhibiting a flow grade of between 55 and 90 and
comprising less than 60% of particles with a diameter of less than 75 µm.
